# EUROPÄISCHE PATENTSCHRIFT

(11) **EP 0 681 805 B1**
(45) Veröffentlichungstag und Bekanntmachung des Hinweises auf die Patenterteilung: **15.01.1997**
(21) Anmeldenummer: 95106187.8
(22) Anmeldetag: 26.04.1995
(51) Int. Cl.: A47J 37/08

(54) **Elektrische Schaltungsanordnung zur vortemperaturabhängigen Heizzeitsteuerung von Heizwiderständen, insbesondere elektrischer Brotröster**
Electrical switching arrangement for regulating the heating time of heating resistors depending on the initial temperature, in particular for a toaster
Dispositif de commande électrique pour la régulation du temps de chauffage de résistances chauffantes en fonction de la température initiale, en particulier pour un toasteur

(30) Priorität: 10.05.1994 DE 4416468
(43) Veröffentlichungstag der Anmeldung: 15.11.1995
(73) Patentinhaber: ROWENTA-WERKE GmbH, D-63071 Offenbach am Main (DE)
(72) Erfinder: Steinle, Michael, Dipl.-Ing. (TH), D-60388 Frankfurt am Main (DE)

(56) Entgegenhaltungen:
- EP-A- 0 086 624
- EP-A- 0 373 487
- DE-A- 3 147 622
- GB-A- 2 220 311
- US-A- 4 134 042
- US-A- 4 518 849

## Beschreibung

Die Erfindung betrifft eine elektrische Schaltungsanordnung nach dem Oberbegriff des Anspruchs 1.

Bekannte Brotröster (Toaster) weisen Heizzeitsteuerungen auf, mit deren Hilfe die Heizzeit für einen Röstvorgang nicht mittels Schaltuhren fest vorgegeben ist, sondern abhängig von der in der Röstkammer bereits vorherrschenden Vortemperatur variabel geschaltet werden kann. Damit lassen sich die Röstzeiten unter Berücksichtigung der nach vorangegangenen Röstvorgängen in der Röstkammer bereits vorhandenen Temperatur anpassen. Wenn das Gerät kalt ist wird länger geröstet, als wenn es infolge vorangegangener Röstungen bereits erwärmt ist.

Eine erste temperaturabhängige Heizzeitsteuerung war im Stand der Technik mit Bimetallwiderständen möglich, die mit der Röstkammer thermisch gekoppelt waren und die Stromversorgung der im Heizkreis liegenden Heizwiderstände bei Erreichen einer bestimmten Soll-Temperatur selbsttätig unterbrachen.

Eine zweite Generation von elektronischen, gleichfalls temperaturabhängig arbeitenden Heizzeitsteuerungen maß die Röstkammer-Innentemperatur mit einem temperaturabhängigen Widerstand mit negativem Temperaturkoeffizienten (sog. NTC-Widerstand, Thermistor oder Heißleiter), durch den die Heizzeiten entsprechend geändert werden konnten.

Auch ist es bekannt, die in der Röstkammer vorherrschende Temperatur zwecks anschließender Röstzeitkompensation nicht direkt in der Röstkammer, sondern mittels eines NTC-Widerstands indirekt über die in Netzteilwiderständen gespeicherte Wärme zu messen, d.h. letztere als Modell für den Temperaturzustand der Röstkammer heranzuziehen.

So ist aus der europäischen Patentschrift EP 037 3 487 B1 eine Vorrichtung zur Heizleistungssteuerung eines Heizwiderstandes bekannt, bei der ein außerhalb der Röstkammer angeordneter Festwiderstand mit einem Thermistor gekoppelt ist, wobei letzterer als Teil einer RC-Oszillatorbeschaltung einem elektronischen Zeitzählwerk vorgeschaltet ist und wobei durch Veränderung der Oszillatorfrequenz des elektronischen Zeitzählwerks entsprechend ein Haltemagnet aktiviert wird, der einen im Heizkreis liegenden Schalter beaufschlagt und den Heizkreis nach einer bestimmten, temperaturabhängig gesteuerten Zeit unterbricht.

Hierdurch konnte das Kompensationsverhalten gegenüber der direkten Temperaturmessung, insbesondere bei langen und/oder unregelmäßigen Pausenzeiten zwischen den Röstungen deutlich verbessert werden.

Derartige mit Oszillatoren beschaltete elektronische Zeitzählwerke weisen als Temperaturfühler jedoch NTC-Widerstände auf, die immerhin das fünfteuerste Bauteil einer herkömmlichen Standard-Toaster-Elektronik darstellen. Zudem ist nachteilig, daß sich der individuell gewünschte und mittels eines Potentiometerwiderstandes individuell einstellbare Röstgrad (Bräunung) und die mittels NTC-Widerstandes erreichbare Temperaturkompensation nicht unabhängig voneinander dimensionieren lassen.

Aufgabe der Erfindung ist es, bei einer gattungsgemäßen Schaltungsanordnung eine kostengünstige und fertigungsfreundliche sichere Entkopplung der Bräunungsgradeinstellung und der Temperaturkompensation zu erreichen und dabei Kosten zu sparen.

Diese Aufgabe wird erfindungsgemäß durch die Merkmale des Anspruchs 1 gelöst.

Vorteilhafterweise entfällt erfindungsgemäß zunächst die zwecks Bereitstellung eines temperaturabhängigen Bauelements mit negativem Temperaturgang im Stand der Technik vorgesehene Anordnung eines relativ teuren NTC-Widerstandes. Als temperaturabhängiges Bauelement wird statt dessen nach entsprechender Dimensionierung und Spezifizierung die Kondensatorkapazität der Oszillatorbeschaltung verwendet. Zwar sind temperaturabhängige Kondensatoren, bei denen diese Eigenschaft ausgelobt ist, als Bauelement allgemeiner Verfügbarkeit nicht bekannt. Bekannt ist aber, daß gewisse Hochleistungskeramiken, d. h. Keramiken zur Herstellung großer Kapazitäten auf kleinstem Raum, sehr große Temperaturkoeffizienten haben. Derartige Keramikmassen verändern ihre Kapazität innerhalb des für Toaster relevanten Temperaturbereichs von 25° - 100° um ca. 30 - 40 %, was in etwa der notwendigen Zeitreduktion am Zeitzählwerk um ca. 35 % entspricht. Erfindungsgemäß entfallen ferner Entkopplungsbauteile, wie z. B. Dioden, die man andernfalls verwenden müßte, um im Stand der Technik z. B. positive Oszillatorhalbwellen hauptsächlich durch den Stellpotentiometerwiderstand und negative Oszillatorhalbwellen hauptsächlich durch den NTC-Widerstand zu leiten. Da im Stand der Technik sowohl die Bräunungsgradeinstellung als auch die Temperaturkompensation über Widerstände erfolgt, deren Ersatzwiderstand gemäß f∼(RC)⁻¹ die Oszillatorfrequenz beeinflußt, ist zur weitgehenden Entkopplung von ausschließlich durch den Potentiometerwiderstand und ausschließlich durch den NTC-Widerstand laufenden Oszillatorhalbwellen zusätzlich ein erfindungsgemäß entfallendes Diodennetzwerk erforderlich.

Weiterbildungen der Erfindung sind in den Unteransprüchen näher gekennzeichnet.

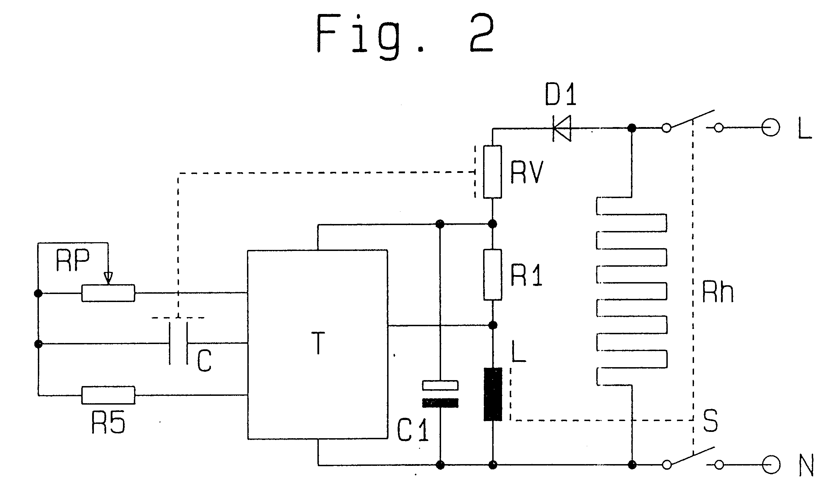

Die Erfindung wird anhand des nachfolgend in Figur 2 dargestellten Ausführungsbeispiels näher erläutert.

Die Zeichnung zeigt in:

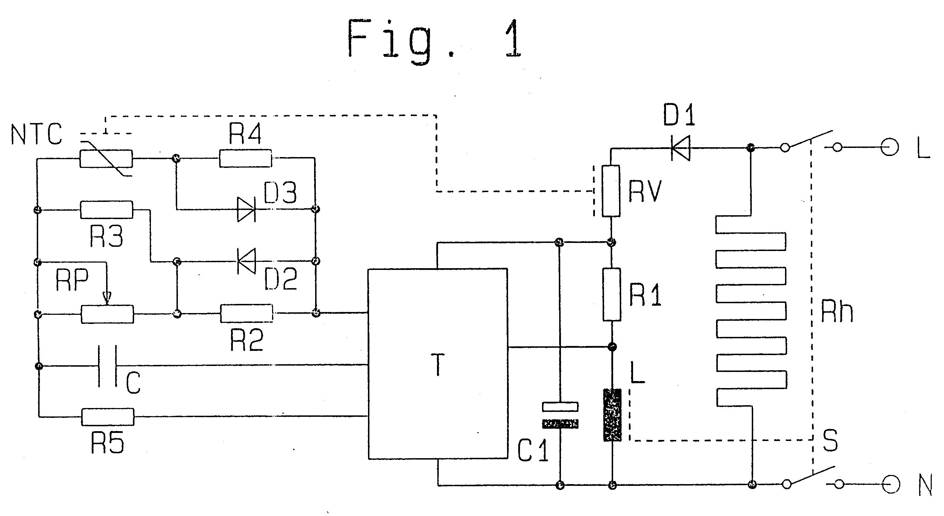

- Figur 1: eine im Stand der Technik bekannte gattungsgemäße Schaltungsanordnung nebst Entkopplungsdioden-Netzwerk,
- Figur 2: eine erfindungsgemäße Schaltungsanordnung.

Figur 2 zeigt die erfindungsgemäße Schaltungsanordnung zur Steuerung der Heizzeit eines mittels Haltemagnet L betätigbaren, über einen zweipoligen Schalter S an den Klemmen L, N eines Wechselstromnetzes liegenden Heizwiderstandes R_{H}. Der hierdurch gebildete Heizkreis wird infolge Abfallens des Haltemagneten L durch den durch diesen beaufschlagten Schalter S getrennt. Über einen mit einer vorgeschalteten Gleichrichterdiode D₁ versehenen Vorwiderstand R_{V} wird die gesamte Schaltungsanordnung zur Heizzeitsteuerung mit Gleichstrom versorgt. Hierbei heizt sich der ohmsche Vorwiderstand R_{V} und mit ihm der thermisch gekoppelte Kondensator C mit zunehmender Einschaltdauer auf. Da erfindungsgemäß bei steigender Temperatur sich die Kapazität des Kondensators C erniedrigt, schwingt der Oszillator bei höherer Temperatur immer schneller. Die im Vorwiderstand R_{V} gespeicherte Wärme sorgt nun bei der nächsten Inbetriebnahme eines Röstvorgangs dafür, daß der Oszillator von Anfang an schneller schwingt, mithin die nächste Röstzeit kürzer wird, da das Zeitzählwerk T nach Erreichen einer definierten Anzahl von Schwingungen den Strom durch die Induktivität des Haltemagneten L unterbricht, was zum Ansprechen bzw. Ausschalten des Schalters S führt. Ein elektronisches als IC ausgebildetes Zeitzählwerk T unterbricht nach einer definierten Anzahl von Schwingungen seines vorgeschalteten RC-Netzwerks (z. B. nach 32.768 Oszillatorschwingungen) die Stromzufuhr zum elektromagnetischen, eine Induktivität aufweisenden Haltemagneten L. Dies hat zur Folge, daß der Heizkreis unterbrochen und die Heizzeitsteuerschaltung nicht mehr mit Strom versorgt wird.

Infolge einer thermischen Kopplung zwischen dem Vorwiderstand R_{V} und dem mit einem negativ temperaturabhängigem Kapazitätsgang ausgebildeten Kondensator C der Oszillatorbeschaltung sorgt nun die in R_{V} bzw. in C=C(T) gespeicherte Wärme dafür, daß entsprechend f∼(RC)⁻¹ der Oszillator bei einer nachfolgenden Röstung von Anfang an schneller schwingt, mithin die nun erforderliche Röstzeit kürzer wird.

Da die sogenannte Gradation, d.h. die Einstellung eines individuell gewünschten Bräunungsgrades des Röstgutes nach wie vor über den Stellpotentiometerwiderstand R_{P}, die Temperaturkompensation aber nunmehr erfindungsgemäß über die mit steigende Temperatur sinkende Kapazität des Kondensators C bzw. infolge der damit verbundenen Frequenzveränderung des Oszillators erfolgt, ist eine sichere Entkopplung und damit einfache Dimensionierung von Gradation und Kompensation möglich. Wegen der multiplikativen Verknüpfung von R und C in f∼(RC)⁻¹ kommt eine prozentuale Änderung von R oder C jeweils unabhängig voneinander jederzeit voll zur Wirkung, damit ist eine völlige Entkopplung des Bräunungsvorgangs und des Temperaturkompensationsvorgangs erfindungsgemäß erreicht.

## Patentansprüche

1. Elektrische Schaltungsanordnung zur vortemperaturabhängigen Heizzeitsteuerung von Heizwiderständen, insbesondere elektrischer Brotröster, mit einem einen Impulszähler nebst vorgeschalteter RC-Oszillator-Beschaltung aufweisenden Zeitzählwerk und mit einer durch das Zeitzählwerk ausgelösten Vorrichtung zur Unterbrechung eines mindestens einen Heizwiderstand R_{H} aufweisenden Heizkreises, wobei das mindestens einen elektrischen Widerstand R und mindestens einen Kondensator C aufweisende RC-Oszillator-Netzwerk einen Potentiometerwiderstand R_{P} zur individuellen Einstellung des Röstgut-Bräunungsgrades und ein temperaturabhängig veränderliches Bauteil zur automatischen Vortemperatur-Kompensation aufweist und wobei - über die Veränderung der Oszillatorfrequenz eine Veränderung der Zählzeit des Impulszählers und damit der Heizzeit des Heizwiderstandes R_{H} erfolgt, **dadurch gekennzeichnet,** daß als temperaturabhängig veränderliches Bauteil der einen negativen Temperaturgang C=C(T) aufweisende Kondensator C der RC-Oszillator-Beschaltung ausgebildet ist.

2. Elektrische Schaltungsanordnung nach Anspruch 1, **dadurch gekennzeichnet,** daß der Kondensator C der RC-Oszillator-Beschaltung mit einem Vorwiderstand R_{V} thermisch gekoppelt ist.

3. Elektrische Schaltungsanordnung nach einem der Ansprüche 1 oder 2, **dadurch gekennzeichnet,** daß der Vorwiderstand R_{V} außerhalb einer Röstkammer des Brotrösters und außerhalb des Heizkreises angeordnet ist.

## Claims

1. Electrical switching arrangement for regulating the heating time of heating resistors depending on the initial temperature, in particular for a toaster, comprising a timer with an impuls meter coupled to a RC oscillator network, a device released by the timer for interrupting a heating circuit having at least one heating resistance R_{H}, said RC oscillator network having at least one electrical resistance R_{P} and one capacitor C contains a potentiometer resistance RP for selecting the individual degree of browning of the bread and a variable component dependent on the temperature for automatic pre-temperature compensation, and based on a variation of the oscillator frequency a variation of the counting time of the impulse meter and herewith a variation of the heating time of the heating resistance R_{H} takes place, characterised in that, the negativ temperature coefficient C=C (T) capacitor C of the RC oscillator network is a variable component dependent on the temperature.

2. Electrical switching arrangement according to claim 1, characterised in that, the capacitor C of the RC oscillator network is thermically coupled to the compensating resistance R_{V}.

3. Electrical switching arrangement according to the claims 1 or 2, characterised in that, the compensating resistance R_{V} is located outside the toasting chamber of the toaster and outside the heating circuit.

## Revendications

1. Commutateur électrique pour la régulation d'un temps de chauffe de résistances chauffantes dépendant de la température initiale, en particulier pour un grille-pain, comprenant une minuterie T avec un compteur d'impulsions associé à un circuit oscillant RC, un dispositif de coupure d'un circuit de chauffe comprenant au moins une résistance chauffante Rh, ledit circuit oscillant RC, comportant au moins une résistance électrique R et un condensateur C, présente un potentiomètre Rp pour la commande indépendante du degré de cuisson ou de grillage et un composant dépendant de la température pour compenser automatiquement la température initiale, produisant par l'intermédiaire d'une variation de la fréquence d'oscillation, une variation du temps de comptage du compteur d'impulsions et par conséquent de la durée de chauffe de la résistance de chauffe Rh, caractérisé en ce que le composant dépendant de la température est réalisé avec le condensateur C=C(T), dont la capacité varie avec la température en présentant un coéfficient de température négatif.

2. Commutateur selon la revendication 1, caractérisé en ce que le condensateeur C du circuit oscillant RC est couplé thermiquement avec une résistance compensatrice Rv.

3. Commutateur selon la revendication 1 ou 2, caractérisé en ce qu'une résistance compensatrice Rv est disposée hors d'une chambre de cuisson et hors du circuit de chauffe.
